# EUROPÄISCHE PATENTANMELDUNG

(11) **EP 0 588 202 A1**
(43) Veröffentlichungstag der Anmeldung: **23.03.1994**
(21) Anmeldenummer: 93114287.1
(22) Anmeldetag: 06.09.1993
(51) Int. Cl.: C09D 7/12, C09D 175/04

(54) **Verwendung von Kunststoffpulvern als Füllstoff in sprüh- und spritzfähigen Beschichtungsmassen, Lacken und Dichtmassen**

(30) Priorität: 17.09.1992 DE 4231074
(71) Anmelder: BAYER AG, 51368 Leverkusen (DE)
(72) Erfinder: Klier, Lothar, Dipl.-Ing., D-40764 Langenfeld (DE); Casselmann, Holger, Dr., D-51469 Bergisch Gladbach (DE); Drouvé, Werner, D-51375 Leverkusen (DE); Jaschke, Niels, Dipl.-Ing., D-51399 Burscheid (DE); Rasshofer, Werner, Dr., D-51061 Köln (DE); Wagner, Joachim, Dr., D-51061 Köln (DE)

(57) **Zusammenfassung**

Die Verwendung von Pulvern des Dichtebereichs 0,1 bis 2,0 g/cm³ und einer mittleren Korngröße von maximal 0,2 mm, die durch mechanische Zerkleinerung von gegebenenfalls mineralische Füllstoffe enthaltenden, festen Kunststoffen erhalten worden sind, als Füllstoff, gegebenenfalls neben weiteren Füllstoffen in sprüh- und spritzfähigen Lacken, Beschichtungs- und Dichtemassen auf Basis von Ein- oder Zweikomponenten-Polyurethan-Bindemitteln.

## Beschreibung

Die Erfindung betrifft die Verwendung von pulverförmigen Kunststoffen, insbesondere von pulverförmigen Polyisocyanat-Polyadditionsprodukten als Füllstoff in sprüh- und spritzfähigen Beschichtungsmassen, Lacken oder Dichtmassen.

Füllstoff-modifizierte Beschichtungsmittel und Dichtmassen, vor allem solche auf Basis von PVC finden insbesondere im Fahrzeugbau weite Anwendung. Sie dienen dort als Steinschlagschutz, Korrosionsschutz und als Antidröhnmassen. Neben den vor allem eingesetzten Beschichtungs- und Dichtmassen auf PVC-Basis finden auch solche auf Basis von zu Polyurethanen ausreagierenden Reaktionsgemischen praktische Verwendung (vgl. z.B. Becker/Braun Kunststoffhandbuch, Band 7, "Polyurethane", Carl Hanser Verlag, München/Wien (1983) Seiten 392 ff.).

Derartige Beschichtungen, insbesondere für den Unterbodenschutz, werden mittels in der Fahrzeugindustrie üblicher Sprüh- und Spritztechnik appliziert.

Die genannten Bindemittel für Beschichtungen und Dichtmassen werden, soweit möglich, lösemittelfrei, aber auch unter der Verwendung von bestimmten Mengen Lösemittel und Weichmacher eingesetzt. Als Füllstoffe werden im allgemeinen anorganische Füllstoffe wie Kreide, Kieselgel, Bariumsulfat oder andere anorganische oder organische Materialien eingesetzt. Auch die in der Beschichtungstechnologie im allgemeinen üblichen Hilfs- und Zusatzstoffe werden oftmals mitverwendet.

Für die Verarbeitung mittels in der Lackiertechnik bekannter und üblicher Sprüh- und Spritzverfahren dürfen die Formulierungen bestimmte Viskositätswerte nicht überschreiten. Die Strukturviskosität und Thixotropie der Formulierungen werden weitgehend über die Füll- und Hilfsstoffe eingestellt.

Bei Beschichtungsmitteln und Dichtmassen auf Basis von zu Polyurethanen ausreagierenden Reaktionsgemischen für den Unterbodenschutz und für Nahtabdichtungen, die mittels üblicher Sprüh- und Spritztechniken appliziert werden, war bislang der Einsatz von pulverförmigen Kunststoffmaterialien als Füllstoff nicht möglich, da die Versprüh- und Verspritzbarkeit nicht gegeben war.

Erst neuerdings sind Methoden bekannt geworden, die es ermöglichen, Kunststoffe in einer hierfür geeigneten feinteiligen und homogenen Pulverform der nachstehend näher definierten Art zur Verfügung zu stellen, so daß der Einsatz dieser Materialien zusammen oder anstelle der bislang eingesetzten anorganischen Füllstoffe in sprüh- und spritzfähigen Lacken, Beschichtungs- und Dichtmassen erstmals möglich wurde.

Aus US-PS 30 30 251 war bereits bekannt, daß zerkleinerte oder pulverförmige Kunststoffe wie Thermoplaste oder Elastomere in Beschichtungen und Lacken als Füllstoff eingebracht werden, um bestimmte Eigenschaften wie z.B. Dämpfung oder Rutschfestigkeit zu erzielen. Beschichtungsmittel, die derartige Kunststoffe als Füllstoffe enthalten, lassen sich mit Ziehspachteln, Rollen oder durch direktes Gießen auf den zu behandelnden Untergrund auftragen, nicht jedoch mittels einer Spritzapplikation, wie z.B. einer Airless-Spritzpistole, versprühen oder vernebeln. Die Ursache hierfür liegt in den meisten Fällen in einer mehr oder weniger uneinheitlichen Teilchengrößenverteilung der Kunststoffe und/oder in der Wechselwirkung der Kunststoffe mit den flüssigen Massen, wie z.B. Quellung und Viskositätsaufbau, die die Ausbildung eines Spritzstrahls unmöglich machen.

Es ist auch bekannt, daß gemahlene Polyurethanabflälle als Füllstoff im Reaktionsspritzguß (RIM) und in Weichschäumen Verwendung finden. Diese Art des Recyclings hat bereits Eingang in die verarbeitende Industrie gefunden; als orientierende Artikel seien genannt: B. Meiser, H. Schaper, Kunststoffe 80, 1260 (1990) und H. Brückner, U. Frank, H. Fransen, W. Raßhofer, H. Schaper, Kunststoffe, 81, 571 (1991). Der bisherige Stand der Technik erlaubte keine Verwendung in spritzfähigen, bzw. versprühbaren Bischichtungen und Lacken.

Die erfindungsgemäß aufgefundene Möglichkeit, feinteilige Kunststoffpulver der nachstehend definierten Art als Füllstoff in Lacken, Beschichtungs- und Dichtmassen auf Polyurethanbasis einzusetzen, stellt im übrigen einen wesentlichen Beitrag zum Recycling von Kunststoffen dar.

Gegenstand der Erfindung ist die Verwendung von
A) Pulvern des Dichtebereichs 0,1 bis 2,0 g/cm³ und einer mittleren Korngröße von maximal 0,2 mm, die durch mechanische Zerkleinerung von, gegebenenfalls mineralische Füllstoffe enthaltenden, festen Kunststoffen erhalten worden sind,
als Füllstoff, gegebenenfalls neben weiteren Füllstoffen in
B) sprüh- und spritzfähigen Lacken, Beschichtungs- und Dichtmassen auf Basis von Ein- oder Zweikomponenten-Polyurethan-Bindemitteln.

Bei der erfindungswesentlichen Komponente A) handelt es sich um Pulver einer Dichte von 0,1 bis 2,0, vorzugsweise 0,3 bis 1,3 g/cm³ und einer mittleren Korngröße von maximal 0,2 mm, vorzugsweise maximal 0,1 mm. Der maximale Teilchendurchmesser der Pulver liegt im allgemeinen bei 0,5, vorzugsweise 0,2 mm. Unter "mittlere Teilchengröße" ist dabei diejenige Partikelgröße (= Durchmesser der massegleichen Kugel) zu verstehen, bei der 50 % aller Teilchen kleiner und 50 % aller Teilchen größer als der angegebene Wert sind. Die maximale Teilchengröße gibt die minimale Maschenweite eines Siebs an, das von den Pulvern zu 100 % passiert wird.

Die als Komponente A) eingesetzten Pulver werden durch Zerkleinerung von festen Kunststoffen hergestellt.

Geeignete Kunststoffe sind thermoplastische oder duroplastische Polyurethane, Polyurethanharnstoffe oder Polyharnstoffe, deren Blends/Composite mit anderen Kunststoffen, Polycarbonat und Polycarbonatblends mit anderen Kunststoffen, ABS und ABS-Blends mit anderen Kunststoffen, PVC und PVC-Blends mit anderen Kunststoffen, PPS und PPS-Blends mit anderen Kunststoffen, PBT und PBT-Blends mit anderen Kunststoffen, LCP und LCP-Blends mit anderen Kunststoffen, PET und PET-Blends mit anderen Kunststoffen, PEK und PEK-Blends mit anderen Kunststoffen, SMA und SMA-Blends mit anderen Kunststoffen, PS und PS-Blends mit anderen Kunststoffen, PTFE und PTFE-Blends mit anderen Kunststoffen, PMMA und PMMA-Blends mit anderen Kunststoffen, POM und POM-Blends mit anderen Kunststoffen, Polyamid oder Polyamid-Blends mit anderen thermoplastischen Kunststoffen, Polyolefine oder Polyolefinblends mit anderen thermoplastischen Kunststoffen.

Die angegebenen Kunststoffe können noch weiter modifiziert sein. So können sie übliche anorganische, bevorzugt mineralische oder organische Füllstoffe oder Verstärkungsmaterialien in faserförmiger, flächiger oder anderer Art in kontinuierlicher oder diskreter Struktur haben, sie können übliche Verarbeitungshilfsmittel oder Mittel zur Verbesserung von mechanischen, Oberflächen- oder Alterungseigenschaften beinhalten. Die angegebenen Kunststoffe können auch lackiert sein oder eine anderweitige Oberflächenmodifizierung durch stromlose oder elektrolytische Metallisierung oder Plattierung, Oberflächenätzung, Plasmabehandlung etc. erfahren haben.

Besonders bevorzugt handelt es sich bei den Kunststoffen, die zur Herstellung der Pulver A) eingesetzt werden, um
(i) kompakte oder geschäumte und gegebenenfalls anorganische Füllstoffe in einer Menge von bis zu 60 Gew.-%, bezogen auf Gesamtgewicht, enthaltende Polyisocyanat-Polyadditionsprodukte, d.h. insbesondere Polyurethane, Polyurethanharnstoffe oder Polyharnstoffe des Dichtebereichs 0,1 bis 2,0, vorzugsweise 0,3 bis 1,3 g/cm³ oder um
(ii) Verbundkörper der unter (i) genannten Kunststoffe mit anderen Kunststoffen, beispielsweise mit Folien aus PVC oder Polyurethan und/oder mit Polyolefinen, wobei diese anderen Kunststoffe, bezogen auf das Gesamtgewicht der Verbundkörper, in Mengen von bis zu 60 Gew.-% vorliegen können.

Zu den bevorzugt zur Herstellung der Kunststoffpulver geeigneten Polyisocyanat-Polyadditionsprodukten bzw.

Verbundkörpern gehören gebrauchte Kunststoffteile, wie sie in der Kraftfahrzeugproduktion eingesetzt werden, und im Rahmen des Kraftfahrzeug-Recyclings einer Wiederverwendung zugeführt werden sollen. Hierzu gehören beispielsweise Stoßfänger, Dachhimmel, Hutablagen, Kofferraumauskleidungen, Türinnenverkleidungen, Kopfstützen, Sitze, Armaturentafeln, Konsolen, energieabsorbierende Schäume und ähnliche Materialien aus Polyisocyanat-Polyadditionsprodukten bzw. Verbundkörpern der obengenannten Art, Die Pulverisierung der genannten Kunststoffe kann nach allen beliebigen Methoden erfolgen. Vorzugsweise erfolgt sie jedoch nach dem Verfahren der deutschen Patentanmeldung P 42 00 443.8, d.h. zwischen Walzen, die sich mit definiertem Drehverhältnis bzw. definiertem Schergeschwindigkeitsverhältnis im Walzenspalt gleich- oder gegensinnig drehen.

Hierbei ist wesentlich, daß
a) eine Schergeschwindigkeit im Spalt von 0,0001 sec⁻¹ bis 100 000 sec⁻¹ eingehalten wird, und daß
b) die entweder alleine oder in Form von Kompositen oder Gemischen oder Gemengen eingesetzten Kunststoffmaterialien eine Mindest-Dichte von 0,5 kg/m³ haben.

Es ist dem Fachmann bekannt, daß es verschiedene Geometrien für die Auslegung der Walzen gibt. So ist es z.B. möglich, zylindrische oder konische Walzen zu wählen.

Vorzugsweise besitzen die eingesetzten Kunststoffmaterialien eine Größe von 1 mm bis 1 m, bevorzugt 1 mm bis 10 cm, bei Dicken bis etwa 10 cm.

Die Walzen werden vorzugsweise so betrieben, daß im Walzenspalt ein Schergefälle von 100 sec⁻¹ bis 20 000 sec⁻¹, bevorzugt von 1000 sec⁻¹ bis 10 000 sec⁻¹, herrscht.

Eine Vorzerkleinerung ist materialabhängig, meist nur bis zu einem Partikeldurchmesser von etwa 10 cm notwendig, die eingesetzten, zu zerkleinernden Materialien können gekühlt sein; bevorzugt werden die Materialien jedoch ungekühlt eingesetzt. Die Walzen können während des Mahlvorganges beheizt werden; bevorzugt werden die Walzen jedoch nicht beheizt, sondern zur Abführung der beim Mahlvorgang entstehenden Wärme zusätzlich gekühlt.

Die Walzen haben gemäß einer besonderen Durchführungsform des Verfahrens eine Betriebstemperatur von 0°C bis 200°C, bevorzugt 0°C bis 30°C, besonders bevorzugt 10°C bis 25°C.

Es werden Walzen mit einer stumpfen, bevorzugt aber mit einer glatten Oberfläche verwendet.

Gemäß einer weiteren besonderen Durchführungsform bilden die Walzen beim Mahlbetrieb einen Spalt unter 1 mm, bevorzugt unter 0,5 mm, besonders bevorzugt unter 0,1 mm.

Dieses Mahlverfahren kann auf mehrere Weisen betrieben werden, So ist es z.B. möglich, mit nur einem Walzenpaar den Walzenspalt der Partikelgröße des Mahlgutes bei Fortschreiten des Mahlvorganges auszuführen. In diesem Fall wird das Mahlgut mehrfach durch den Walzenspalt gefahren. Es ist jedoch weiterhin auch möglich - wie dem Fachmann hinlänglich bekannt -, mit mehreren Walzen in Kaskade zu arbeiten und gegebenenfalls hierbei die Walzenspalte sukzessive kleiner zu wählen.

Mehrere unterschiedliche oder gleiche Walzenanlagen in Kaskade haben zusätzlich den Vorteil, daß damit in einem kontinuierlichen Mahlprozeß bei höherem Durchsatz eine feinere Partikelgröße zu erzielen ist.

Bei der Komponente B) handelt es sich um Ein- oder Zweikomponenten-Polyurethan-Systeme, d.h. um Lacke, Beschichtungs- oder Dichtmassen, die als Bindemittel-Kombinationen von organischen Verbindungen mit gegenüber Isocyanatgruppen reaktionsfähigen Gruppen, insbesondere Polyhydroxylverbindungen, mit organischen Polyisocyanaten mit freien Isocyanatgruppen (Zweikomponenten-Systeme) oder Kombinationen von Polyhydroxylverbindungen und/oder Polyaminen mit Polyisocyanaten mit blockierten Isocyanatgruppen (Einkomponenten-Systeme) enthalten. Die erfindungsgemäß zum Einsatz gelangenden Lacke, Beschichtungs- und Dichtmassen weisen bei 23°C im allgemeinen eine Viskosität von 1000 bis 10000, vorzugsweise 2000 bis 6000 mPa.s auf und werden gegebenenfalls in erwärmten Zustand von bis zu 70°C verspritzt, bevorzugt jedoch bei Raumtemperatur appliziert. Sie enthalten im allgemeinen weitere aus der Beschichtungstechnologie an sich bekannte Hilfsmittel wie beispielsweise
- anorganische Füllstoffe wie Kreide oder Bariumsulfat;
- Weichmacher und/oder Lösungsmittel wie beispielsweise Weichmacheröle auf Mineralölbasis, als Weichmacher wirkende Ester der Adipin-, Phthal- oder Phosphorsäure, Lösungsmittel der an sich bekannten Art wie beispielsweise Butylacetat, Methyl-ethyl-keton, Methyl-isobutyl-keton, Methoxypropylacetat, Toluol, Xylol oder Gemische derartiger Lösungsmittel;
- Farbstoffe, Pigmente, Entschäumungs-, Verdickungs- und Verlaufmittel und gegebenenfalls Katalysatoren für die Isocyanat-Additionsreaktion.

Der Gehalt an erfindungswesentlichen Füllstoffen liegt im allgemeinen, bezogen auf das Gesamtgewicht der gebrauchsfertigen Mischung, bei 1 bis 90, vorzugsweise 10 bis 50 Gew.-%. Die erfindungswesentlichen Füllstoffe werden oftmals zusammen mit anorganischen Füllstoffen eingesetzt, wobei deren Menge bis zu 90, vorzugsweise bis zu 70 Gew.-%, bezogen auf das Gewicht der erfindungswesentlichen Füllstoffe A) beträgt.

Die Menge der in den gebrauchsfertigen erfindungsgemäßen Systemen vorliegenden Weichmacher liegt bei 0 bis 50, vorzugsweise 0 bis 40 Gew.-%, der Anteil an organischen Lösungsmitteln bei 0 bis 35, vorzugsweise 0 bis 20 Gew.-%, jeweils bezogen auf das Gesamtgewicht der gebrauchsfertigen Kompositionen.

Im Falle der Verwendung der erfindungswesentlichen Füllstoffe A) in Zweikomponenten-Systemen der obengenannten Art werden die Füllstoffe vorzugsweise der Polyolkomponente einverleibt.

Von den erfindungswesentlichen Füllstoffen A) abgesehen, entsprechen die erfindungsgemäß zum Einsatz gelangenden Lacke, Beschichtungs- und Dichtmassen den bekannten Systemen des Standes der Technik. Bezüglich weiterer Einzelheiten bezüglich der Zusammensetzung der erfindungsgemäß in Betracht kommenden Kompositionen kann daher auf die einschlägige Fachliteratur verwiesen werden.

Zweikomponenten-Polyurethanlacke und -Beschichtungsmassen der oben angesprochenen Art sind beispielsweise in EP-A-0 209 823 und EP-A-0 364 738 beschrieben.

Einkomponenten-Systeme auf Basis von organischen Polyhydroxylverbindungen bzw. Polyaminen und organischen Polyisocyanaten mit blockierten Isocyanatgruppen sind beispielsweise in DE-PS 2 131 299 beschrieben.

Die erfindungsgemäßen Lacke, Beschichtungs- und Dichtmassen werden durch Sprühen bzw. Spritzen auf die jeweiligen Substrate aufgetragen.

Bevorzugte Anwendungsgebiete für die erfindungsgemäßen Kompositionen sind spritzfähige Lacke, Beschichtungsmassen, Dichtmassen und lärmdammende Beschichtungen im Fahrzeugbau. Bevorzugte Anwendungen sind der Unterbodenschutz und Nahtabdichtungen im Automobilsektor, wobei die erfindungsgemäßen Kunststoffpulver A) im Sinne des Recyclings aus Altkunststoffen hergestellt werden sollten.

In den nachstehenden Beispielen beziehen sich alle Angaben in "Prozent" und in "Teilen" auf das Gewicht.

### Beispiele

Zur Herstellung der Kunststoffpulver 1 und 2 in den folgenden Beispielen wurde auf einem Labor-Walzwerk des Typs SK 6612 der Firma Berstorff, Hannover, gearbeitet. Diese Maschine besitzt zwei unabhängig in der Drehzahl im Bereich von 7 - 31,5 min⁻¹ steuerbare, festgelagerte Walzen des Umfanges 62 cm und der Länge 45 cm; der Walzenspalt kann bis auf unter 0,025 mm verringert werden. Die Walzen waren während der Mahlvorgänge nicht beheizt.

Die Messung der Partikel-Größenverteilung wurde mit einem Malvern-Particle-Sizer, Modell 2600, der Firma Malvern, Great-Malvern, UK, vorgenommen. Dieses Meßgerät arbeitet auf der Basis der Lichtbeugungs-Spektroskopie im Partikelgrößenbereich von 1 µm bis ca. 1 mm.

Die pulverförmigen Proben wurden zur Messung in Wasser eingerührt und ca. 60 sec. mit Ultraschall (Gerät XL der Firma Branson, Hilden, BRD) dispergiert. Die angegebenen mittleren Partikelgrößen sind diejenigen Partikelgrößen (= Durchmesser der massegleichen Kugel), bei der 50 % aller Teilchen kleiner und 50 % aller Teilchen größer als der angegebene Wert sind.

### Kunststoffpulver 1

Kunststoffpulver 1 wurde aus Polyurethan-Weichschaum der Dichte von etwa 50 kg/m³ hergestellt. Für die Weichschaum-Herstellung diente folgende Rezeptur:

### A-Komponente:

100 Teile eines Polyetherpolyols der OH-Zahl 28, hergestellt durch Propoxylierung von Trimethylolpropan und anschließende Ethoxylierung des Propoxylierungsprodukts (PO:EO-Gewichtsverhältnis = 87:13)
3 Teile Wasser
0,12 Teile Bis-dimethylaminoethyl-ether
0,5 Teile einer 33 gew.-%igen Lösung von Triethylendiamin in Dipropylenglykol
0,6 Teile eines Gemischs aliphatischer Amine ("Vernetzer 56", ein Handelsprodukt der Bayer AG)
0,4 Teile eines handelsüblichen Polysiloxan-Stabilisators (Stabilisator KS 43 der Bayer AG)

### B-Komponente:

50,7 Teile eines Polyisocyanatgemischs der Diphenylmethanreihe mit einem Gehalt an Diisocyanatodiphenylmethan-Isomeren von 85 Gew.-%, die sich ihrerseits im wesentlichen aus 25 Gew.-% 2,4'-Diisocyanatodiphenylmethan und zum Rest aus 4,4'-Diisocyanatodiphenyl-methan zusammensetzen.

Die A-Komponente wird auf einer Hochdruckmaschine mit der B-Komponente vermischt und das Reaktionsgemisch in eine 40 l-Kastenform eingetragen, die auf etwa 50°C angewärmt ist. Die Form wird geschlossen und das Formteil nach etwa 6 Min. aus der Form genommen. Das Füllgewicht beträgt 2,38 kg.

### Mechanische Daten:

| | |
|---|---|
| Rohdichte nach DIN 53 420 | 55 kg/m³ |
| Stauchhärte nach DIN 53 577 | 6,4 kPa |
| Zugfestigkeit nach DIN 53 571 | 158 kPa |
| Bruchdehnung nach DIN 53 571 | 132 % |
| Druckverformungsrest nach DIN 53 572 | 6,7 % |
| 50 % Cₜ-Wert | |

Der solchermaßen hergestellte Schaum wird ohne weitere Vorzerkleinerung direkt auf dem Walzwerk unter folgenden Bedingungen gemahlen:

| | |
|---|---|
| Drehzahl Walze 1 | 20 U/min |
| Drehzahl Walze 2 | 10 U/min |
| Walzenspalt | 100 µm |
| Anzahl der Material-Durchgänge durch den Walzenspalt | 3 |
| Erreichte mittlere Partikelgröße | 127 µm. |

### Kunststoffpulver 2

Kunststoffpulver 2 besteht aus einem RIM-Polyurethanharnstoff mit Glasfaserverstärkung der Dichte von etwa 1200 kg/m³. Dieses Material ist nach folgender Vorschrift hergestellt worden. Verwendet wurde eine Polyol-Komponente bestehend aus
67,40 Tle. eines Polyethers der OH-Zahl 35, erhalten durch blockweise Addition von zuerst 87 Gew.-% Propylenoxid und dann 13 Gew.-% Ethylenoxid an Trimethylolpropan
24 Tle. eines Gemisches aus 65 Tln. 1-Methyl-3,5-diethyl-2,4-diamino-benzol und 35 Tln. 1-Methyl-3,5-diethyl-2,6-diamino-benzol (DETDA)
2 Tle. eines Polyricinolsäureesters mit einer > 5 liegenden Säurezahl
4,7 Tle. eines 2:1:1-Gemisches aus DETDA, Zinkstearat und Bis-(3-dimethylaminopropyl)-amin
0,7 Tle. Dabco 33 LV, ein aminischer Katalysator der Air Products
0,1 Tle. UL 28, ein Zinnkatalysator der Witco
0,1 Tle. B 8404, ein Siloxanstabilisator der Goldschmidt AG.
100 Tle. dieser Polyolformulierung werden mit 45,6 Tln. gemahlener Glasfaser MF 7901 Handelsprodukt (Bayer AG, Leverkusen, BRD) vermischt (entspricht einem Glasgehalt von 22,5 Gew.-%).
100 Tle. dieser Polyol/Glas-Mischung werden mit 40 Tln. eines Polyisocyanats nach dem Prinzip der Reaktionsspritzgußtechnik unter Verwendung einer geschlossenen Plattenform zu einem 4 mm dicken plattenförmigen Formkörper verarbeitet. Als Polyisocyanat wurde ein Umsetzungsprodukt von 4,4'-Diisocyanato-diphenylmethan mit Tripropylenglykol mit einem NCO-Gehalt von 24,5 Gew.-% verwendet.

Der so hergestellte Formkörper wurde mechanisch so vorzerkleinert, daß Teile einer Größe 10 cm x 10 cm x 4 mm resultierten.

Diese wurden ohne weitere Zerkleinerung auf dem Walzwerk gemahlen, und zwar unter folgenden Bedingungen:

| | |
|---|---|
| Drehzahl Walze 1 | 24 min⁻¹ |
| Drehzahl Walze 2 | 6 min⁻¹ |
| Walzenspalt | 180 µm |
| Anzahl der Material-Durchgänge durch den Walzenspalt | 3 |
| Erreichte mittlere Partikelgröße | 200 µm |

### Beispiel 1 (Spritzfähiger, einkomponentiger Polyurethan-Einbrennlack und seine Verwendung)

Aus der Vormischung 1a) werden zwei unterschiedlich gefüllte Lacke 1b) und 1c) hergestellt:

### Vormischung 1a)

423,1 Teile eines Prepolymeren mit einem Gehalt an ε-Caprolactam-blockierten, aromatisch gebundenen NCO-Gruppen (berechnet als NCO) von 3,1 Gew.-% bei einer mittleren Funktionalität, bezogen auf die blockierten Isocyanatgruppen von 2,5 (®Desmodur BL 1100, Hersteller: Bayer AG, Leverkusen) werden mit 33,9 Teilen 4,4'-Diamino-3,3'-dimethyl-dicyclohexylmethan, 321,8 Teilen eines handelsüblichen Weichmachers auf Adipinsäureester-Basis (®Vestinol OA, Hersteller: Hüls AG, Marl), 54,9 Teilen handelsübliches Titandioxid-Pigment (®Bayertitan R-KB-2, Hersteller: Bayer AG, Leverkusen), 5,4 Teilen eines handelsüblichen Eisenoxidpigments (®Bayferrox 303 T, Hersteller: Bayer AG, Leverkusen), 43 Gew.-Teilen handelsüblicher Kreide (®Socal 312 N, Hersteller: Deutsche Solvay-Werke, Solingen) und 14,7 Teilen handelsüblichen Kieselgels (®Aerosil 130, Hersteller: Degussa AG, Frankfurt) versetzt.

### Einkomponentiger Polyurethanlack 1b (Vergleich)

Zu 896,8 Teilen der Vormischung 1a) werden 103,2 Teile der vorgenannten Kreide gegeben und 30 Minuten in einem Dissolver bei 2800 U/min vermischt, wobei die Temperatur 60°C nicht überschreitet. Anschließend wird der Lack in einem Vakuum-Kneter 30 min entlüftet.

Die Viskosität des Lackes (23°C) beträgt bei einem Schergefälle von D = 39,9 s⁻¹ ca. 2500 mPa.s. Der Lack ist strukturviskos.

### Einkomnonentiger Polyurethanlack 1c) (erfindungsgemäß)

Zu 896,8 Teilen der Vormischung 1a) werden 103,2 Teile des vorstehend beschriebenen Kunststoffpulvers 1 gegeben und 30 Minuten in einem Dissolver bei 2800 U/min vermischt, wobei die Temperatur 60°C nicht überschreitet.

Anschließend wird der Lack in einem Vakuum-Kneter 30 min entlüftet.

Die Viskosität des Lackes (23°C) beträgt bei einem Schergefälle von D = 39,9 s⁻¹ 3500 bis 4500 mPa.s. Der Lack ist strukturviskos.

### Lackierung:

Die Lacke 1b) und 1c) werden jeweils auf ein mit Elektrotauchlack kathodisch beschichtetes Eisenblech (Lackierversuchsbleche der Fa. Mercedes Benz AG, Sindelfingen) gespritzt.

### Spritzanlage:

1K-Airless-Kolbenpumpe (Typ PPA 531, Fa. Devilbiss)
Verstelldüse der Spritzpistole 0,41 mm
Spritzdruck 400 bar, airless
Die Lacke 1b) und 1c) lassen sich bis zu einer Naßfilmdicke von 750 µm blasenfrei auftragen, ohne daß Verlaufstörungen auftreten oder der Lack an senkrechten Flächen abläuft.

Die lackierten Bleche werden in einem Umluftofen 30 min bei 160°C eingebrannt und anschließend auf Abriebfestigkeit geprüft.

Die erhaltenen Beschichtungen (Trockenfilmdicke: 570 µm) sind zähelastisch, kompakt mit guter Haftung an den Untergrund.

### Prüfung der Abriebfestigkeit:

Die lackierten und eingebrannten Bleche werden hierzu mittels Druckluft solange mit Stahlschrot beschossen, bis freies Metall des lackierten Bleches sichtbar wird. Die hierfür erforderliche Dauer wird zur Beurteilung der Abriebfestigkeit herangezogen.
Prüfgerät: Sablux ST 700
Anstellwinkel des lackierten Bleches zur Beschußrichtung: 30°
Stahlschrot: Fa. Auer Strahltechnik/Mannheim Typ GP 14, Durchmesser 1,5 bis 2,5 mm
Luftdruck: 3 bar
Beschußabstand: 100 mm
Bei einer Trockenfilmdicke von 570 µm weisen die mit den Lacken 1b) und Lack 1c) beschichteten Bleche eine identische Abriebfestigkeit auf (Beschußdauer: 90 sec).

### Beispiel 2 (Spritzfähiger, zweikomponentiger Polyurethan-Einbrennlack und Verwendung)

Aus der Vormischung 2a) werden zwei unterschiedlich gefüllte Polyolformulierungen 2b) und 2c) hergestellt und jeweils mit einer identischen Härterkomponente 2d) zu zwei zweikomponentigen Lacken verarbeitet.

### Vormischung Komponente 2a)

4.523,8 Teile eines handelsüblichen, modifizierten Rhizinusöls mit einem Hydroxylgruppengehalt von 5 % und einer Viskosität bei 23°C von 5.000 mPa.s (®Dermophen 1150 der Bayer AG, Leverkusen) werden mit 102 Teilen Titandioxid (gemäß Beispiel 1), 864,6 Teilen einer handelsüblichen Kreide (®Socal 31, Hersteller: Solvay-Werke, Solingen), 4 Gew.-Teilen Ruß (Flammruß 101, Hersteller: Fa. Degussa AG, Frankfurt), 452,0 Gew.-Teilen Zeolith (®Baylith-L-Paste, 50%ige Lieferform, Hersteller: Bayer AG, Leverkusen), 25,0 Teilen eines handelsüblichen Entlüftungsmittels (®Acronat 700, Hersteller: BASF AG, Ludwigshafen), 926 Teilen eines handelsüblichen Weichmachers auf Parafinsulfonsäurephenylester-Basis (®Mesamol, Hersteller: Bayer AG, Leverkusen), 56 Teilen einer 33%igen Lösung von Triethylendiamin in Dipropylenglycol, 123 Teilen einer 67%igen Lösung in Propylencarbonat eines Diamingemischs bestehend aus 65 % 1-Methyl-3,5-diethyl-2,4-diaminobenzol und 35 % 1-Methyl-3,5-diethyl-2,6-diaminobenzol (DETDA) und 93 Teilen eines hydrierten Rhizinusöls (®Thixatrol GST, Hersteller: Kronos Titan GmbH, Leverkusen) versetzt.

### Polyolkomponente 2b) (Vergleich)

7169,4 der Vormischung 2a) mit 102,0 Teilen Titandioxid (gemäß Beispiel 1), 864,6 Teilen der in der Vormischung 2a) verwendeten Kreide und 4,0 Teilen des vorstehend genannten Rußes versetzt und nach Vermischen in einem Dissolver 30 min in einer Perlmühle (z.B. Typ Dyno-Mill, Fa. Willy A. Bachofen/Basel, Schweiz) bei Temperaturen < 55°C angerieben.

Anschließend wird 30 min in einem Vakuumkneter entlüftet.

### Polykomponente 2c) (erfindungsgemäß)

7169,4 Teile der Vormischung 2a) werden mit 970,6 Teilen des zuvor beschriebenen Kunststoffpulvers 2 versetzt und nach Vermischen in einem Dissolver 30 min in einer Perlmühle (z.B. Typ Dyno-Mill, Fa. Willy A. Bachofen/Basel, Schweiz) bei Temperaturen < 55°C angerieben.

Anschließend wird 30 min in einem Vakuumkneter entlüftet.

### Härterkomponente 2d)

Die Härterkomponente 2d) besteht aus einem Polyisocyanatgemisch der Diphenylmethanreihe mit einem NCO-Gehalt von 32,5 % und einer Viskosität bei 23°C von 50 mPa.s.

### Lackierung:

Die Polyolkomponenten 2b) und 2c) werden jeweils zusammen mit der Härterkomponente 2d) in einer Zweikomponenten-Lackieranlage in einem Gewichtsverhältnis von 100 : 22,9 unmittelbar vor der Spritzdüse in einem statischen Mischrohr von 30 cm Länge völlig miteinander vermischt und jeweils auf ein mit Elektrotauchlack kathodisch beschichtetes Eisenblech (Lackierversuchsbleche der Fa. Mercedes-Benz AG/Sindelfingen) gespritzt.

Nach Vermischung der Komponenten beträgt die Verarbeitungszeit 3 bis 5 min.

### Spritzanlage:

2K-Spritzanlage 2K 6000, Fa. 2KM/Marienheide
Verstelldüse der Spritzpistole 0,41 mm
Spritzdruck 180 bis 205 bar, airless
Die Lacke lassen sich bis zu einer Naßfilmdicke von 1000 µm blasenfrei auftragen, ohne daß Verlaufstörungen auftreten oder der Lack an senkrechten Flächen abläuft.

Die lackierten Bleche werden in einem Umluftofen 30 min bei 160°C eingebrannt und auf Abriebfestigkeit geprüft.

Die Beschichtungen härten auch bei Raumtemperatur innerhalb 1 bis 2 Stunden vollständig aus, so daß eine Aushärtung bei den zuvor genannten Temperaturen nicht unbedingt notwendig ist.

Die erhaltenen Beschichtungen (Trockenfilmdicke 530 µm) sind zäh-elastisch, kompakt mit guter Haftung an den Untergrund.

### Prüfung der Abriebfestigkeit:

Die Prüfung der Abriebfestigkeit erfolgt wie in Beispiel 1 beschrieben.

Bei einer Trockenfilmdicke von 530 µm weisen die jeweils mit den Lacken aus Polyolkomponente 2b) und Härterkomponente 2d) bzw. Polyolkomponente 2c) und Härterkomponente 2d) beschichteten Bleche eine identische Abriebfestigkeit auf (Beschußdauer: 160 sec).

## Patentansprüche

1. Verwendung von
A) Pulvern des Dichtebereichs 0,1 bis 2,0 g/cm³ und einer mittleren Korngröße von maximal 0,2 mm, die durch mechanische Zerkleinerung von, gegebenenfalls mineralische Füllstoffe enthaltenden, festen Kunststoffen erhalten worden sind,
als Füllstoff, gegebenenfalls neben weiteren Füllstoffen in
B) sprüh- und spritzfähigen Lacken, Beschichtungs- und Dichtmassen auf Basis von Ein-oder Zweikomponenten-Polyurethan-Bindemitteln.

2. Verwendung gemäß Anspruch 1, dadurch gekennzeichnet, daß es sich bei den Pulvern A) um solche des Dichtebereichs 0,3 bis 1,3 g/cm³ und einer mittleren Korngröße von max. 0,2 mm handelt.

3. Verwendung gemäß Anspruch 1 und 2, dadurch gekennzeichnet, daß es sich bei der Komponente A) um solche Pulver handelt, die durch mechanische Zerkleinerung von festen Polyisocyanat-Polyadditionsprodukten, die gegebenenfalls bis zu 60 Gew.-% an mineralischen Füllstoffen enthalten, erhalten worden sind.

4. Verwendung gemäß Anspruch 1 und 2, dadurch gekennzeichnet, daß es sich bei der Komponente A) um Pulver handelt, die durch mechanische Zerkleinerung von Verbundkörpern bestehend aus (i) Polyisocyanat-Polyadditionsprodukten gemäß Anspruch 3 und (ii) anderen Kunststoffen erhalten worden sind, wobei der Anteil der Kunststoffe (ii) bis zu 60 Gew.-%, bezogen auf das Gesamtgewicht der Verbundkörper ausmacht.

5. Verwendung gemäß Anspruch 1 bis 4, dadurch gekennzeichnet, daß es sich bei der Komponente B) um ein Zweikomponenten-Polyurethan-Beschichtungsmittel auf Basis von organischen Polyisocyanaten und organischen Polyhydroxylverbindungen handelt.

6. Verwendung gemäß Anspruch 1 bis 4, dadurch gekennzeichnet, daß es sich bei der Komponente B) um ein Einkomponenten-Polyurethan-Beschichtungsmittel auf Basis von organischen Polyisocyanaten mit blockierten Isocyanatgruppen und organischen Polyhydroxylverbindungen und/oder Polyamin handelt.

7. Verwendung gemäß Anspruch 1 bis 6, dadurch gekennzeichnet, daß die Komponente A) in einer Menge von 1 bis 90 Gew.-%, bezogen auf Gesamtgewicht der gebrauchsfertigen Mischung, zum Einsatz gelangt.
